# DEMANDE DE BREVET EUROPEEN

(11) **EP 1 139 636 A2**
(43) Date de publication de la demande: **04.10.2001**
(21) Numéro de dépôt: 01400740.5
(22) Date de dépôt: 22.03.2001
(51) Int. Cl.: H04L 29/06, G05B 19/418

(54) **Système d'accès à un ensemble d'automatisme programmable basé sur une architecture WAP**

(30) Priorité: 31.03.2000 FR 0004669
(71) Demandeur: Schneider Automation, 06560 Valbonne (FR)
(72) Inventeur: Hardy, Christian, Ing., 83340 Le Thoronet (FR); Rousseau, Robert, 06600 Antibes (FR); Stawikowski, Jean-Marie, Ing., 06600 Antibes (FR); Vincent, Christophe, Ing., 06550 La Roquette-sur-Siagne (FR)
(74) Mandataire: Carias, Alain

(57) **Abrégé**

La présente invention concerne un système d'accès à un ensemble d'automatisme programmable (10) basé sur une architecture WAP, à partir d'au moins un appareil mobile communicant (40) autonome, tel qu'un téléphone portable, lequel intègre un navigateur (41) conforme à l'architecture WAP. Ce système comporte un serveur WEB (20), embarqué dans un équipement d'automatisme de l'ensemble d'automatisme (10), capable de générer des informations statiques ou dynamiques codées suivant le langage WML, et une interface réseau (30), reliée au serveur WEB (20) par un réseau (25) de type Internet, qui autorise l'accès aux dites informations à partir du navigateur WAP (41) d'un appareil mobile communicant (40) via un réseau sans fil (35), de telle façon qu'un utilisateur d'un tel navigateur WAP (41) peut accéder à des fonctions de surveillance, de visualisation et de contrôle de l'ensemble d'automatisme (10).

## Description

La présente invention concerne un système d'accès à un ensemble d'automatisme programmable à partir d'au moins un appareil mobile communicant autonome, tel qu'un téléphone portable. Ce système d'accès est basé sur une architecture WAP et peut s'appliquer à toute application appartenant au domaine des automatismes industriels, des automatismes du bâtiment ou du contrôle/commande des réseaux électriques de distribution.

Il est déjà connu d'accéder à un ensemble d'automatisme à partir d'un navigateur WEB standard via un réseau de type Internet ou Intranet grâce à l'utilisation d'un serveur WEB embarqué dans l'ensemble d'automatisme et capable de générer des fichiers au format HTML. On peut ainsi par une approche innovante accéder, sous forme de pages au format HTML, aux variables de l'ensemble d'automatisme en utilisant les multiples ressources d'un réseau de type Internet. Ces possibilités sont décrites dans plusieurs documents, par exemple dans les brevets US 5805442, US 5975737 et WO 9913418. Cependant une telle solution impose à son utilisateur de recourir à un appareil possédant une connexion à un réseau de type Internet ou Intranet et capable d'intégrer un navigateur WEB standard.

Or le besoin existe de plus en plus de vouloir accéder aux variables d'un ensemble d'automatisme, notamment pour des opérations de diagnostic ou de maintenance, à partir d'appareils mobiles communicants autonomes. Dans la suite de l'exposé, ces appareils mobiles regroupent des téléphones portables, des appareils de type PDA (Personal Digital Assistant) ou tout appareil mobile au format de poche (handheld device); ils se caractérisent entre autres par leur interface utilisateur simple (petite taille d'écran) et leur connexion à un réseau sans fil. Ces caractéristiques entraînent notamment une limitation de la bande passante disponible pour la communication, une moins bonne disponibilité du réseau et une limitation de la capacité d'affichage sur l'écran. De ce fait, les navigateurs WEB standard ne sont pas adaptés à ce type d'appareils.

L'architecture WAP (Wireless Application Protocol) a été élaborée par le "WAP Forum" (*http://www.wapforum.org/*) pour définir une spécification globale permettant à des appareils mobiles possédant un micro-navigateur, ci-après appelé navigateur WAP, de communiquer sans liaison filaire sur un réseau de type Internet en utilisant un langage WML (Wireless Markup Language). Ce langage, qui est conforme à la syntaxe du métalangage XML et au standard de communication HTTP, a été conçu pour de petits écrans et de ce fait est beaucoup plus adapté que le langage HTML aux appareils mobiles.

Le langage WML inclut les contenus WML source, WMLScript source, WML compilé, WMLScript compilé, WBMP image, etc... . Dans la présente invention, ces différents contenus sont regroupés sous la dénomination langage WML. Tous ces contenus sont accessibles par Internet en employant des requêtes standards HTTP.

Le but de l'invention est donc de pouvoir fournir aux utilisateurs d'appareils mobiles communicants possédant un navigateur WAP la possibilité de communiquer à distance avec un ensemble d'automatisme via un réseau sans fil, en mettant en oeuvre les possibilités d'un réseau global de type Internet, Intranet ou Extranet l'une des applications de ce système d'accès étant par exemple de faciliter le travail d'agents de maintenance ayant à se déplacer sur un site étendu ou sur différents sites.

Pour cela, l'invention décrit un système d'accès à un ensemble d'automatisme programmable basé sur une architecture WAP, à partir d'au moins un appareil mobile communicant autonome, tel qu'un téléphone portable, lequel intègre un navigateur conforme à l'architecture WAP. Le système décrit comporte un serveur WEB, embarqué dans un équipement d'automatisme de l'ensemble d'automatisme, capable de générer des informations statiques ou dynamiques codées suivant le langage WML, ces informations pouvant fournir des fonctions de surveillance, de visualisation et de contrôle de l'ensemble d'automatisme. Le serveur WEB est relié par un réseau global de type Internet, Intranet ou Extranet à une interface réseau qui autorise l'accès aux dites informations à partir du navigateur WAP d'un appareil mobile communicant de telle façon qu'un utilisateur d'un tel navigateur WAP peut accéder à des fonctions de surveillance, de visualisation et de contrôle de l'ensemble d'automatisme.

Le serveur WEB peut recevoir via l'interface réseau une commande WAP sous forme d'une requête HTTP spécifiant une adresse URL et, en réponse à cette commande WAP, le serveur WEB génère des informations statiques ou dynamiques codées en langages WML pouvant fournir des fonctions de surveillance, de visualisation et de contrôle de l'ensemble d'automatisme à l'utilisateur d'un navigateur WAP implanté dans un appareil mobile communicant. Par ailleurs le serveur WEB peut envoyer, à son initiative ou à l'initiative de l'ensemble d'automatisme, une notification à destination d'au moins un appareil mobile communicant en utilisant le "Push Access Protocol" défini dans l'architecture WAP, de façon que l'utilisateur d'un navigateur WAP implanté dans un appareil mobile communicant puisse être informé d'événements ou d'états concernant l'ensemble d'automatisme.

D'autres caractéristiques et avantages vont apparaître dans la description détaillée qui suit en se référant à un mode de réalisation donné à titre d'exemple et représenté par les dessins annexés sur lesquels :
- la figure 1 représente un premier exemple d'architecture de communication conforme à l'invention,
- la figure 2 représente un autre exemple d'architecture de communication conforme à l'invention,
- la figure 3 donne un schéma simplifié des communications entre les éléments du système d'accès.

Un ensemble d'automatisme programmable 10 tel que défini dans la présente invention comprend un ou plusieurs équipements d'automatisme 11 et est plus particulièrement destiné à faire du contrôle/commande d'automatismes industriels, d'automatismes du bâtiment ou de réseaux électriques de distribution.

Sous le terme équipement d'automatisme, on désignera ci-après indifféremment un automate programmable, une commande numérique, une station de contrôle/commande mais aussi tout équipement ou module d'automatisme possédant au moins une unité de traitement et capable d'exécuter un programme pour offrir une ou plusieurs fonctions d'automatisme. Par exemple, on inclura dans cette définition un module métier d'automate programmable, un module d'entrées/sorties d'automate programmable, un terminal de dialogue, un variateur de vitesse, un capteur ou actionneur intelligent, etc.... De tels équipements d'automatisme peuvent être connectés entre eux par un ou plusieurs réseaux d'automatisme 15 locaux ou globaux pour former un ensemble d'automatisme 10.

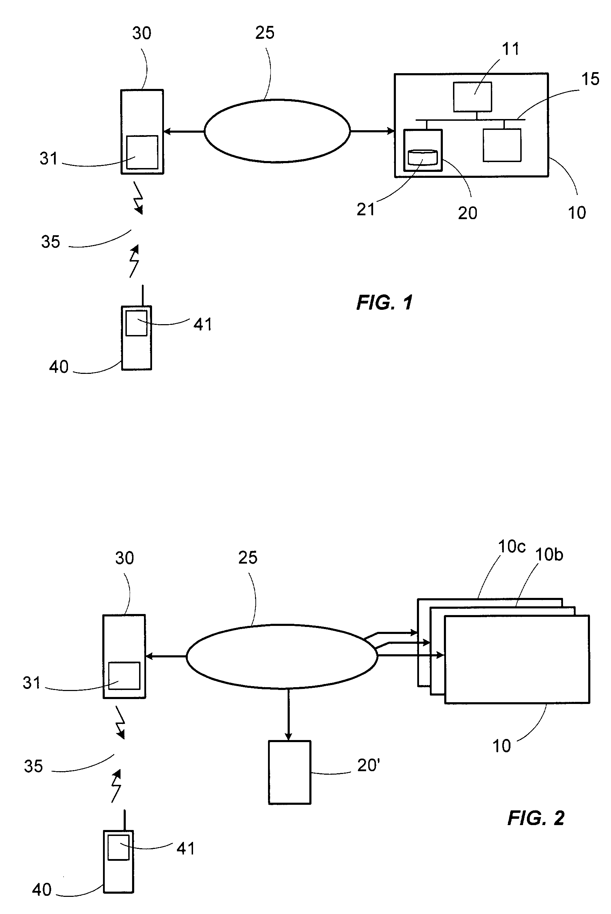

Selon un mode de réalisation préféré, la figure 1 montre un exemple d'architecture de communication dans laquelle un ensemble d'automatisme 10 intègre un serveur WEB 20. Ce serveur WEB 20 est embarqué dans un équipement d'automatisme quelconque appartenant à l'ensemble d'automatisme 10. Par exemple, dans le cas où l'équipement d'automatisme est un automate programmable 11 comprenant une unité centrale, le serveur WEB 20 peut être soit embarqué dans l'unité centrale de l'automate 11, soit localisé dans un module de l'automate programmable 11 communiquant avec l'unité centrale de cet automate 11 par le bus fond de panier de l'automate. Le serveur WEB 20 peut être également un équipement d'automatisme autonome appartenant à l'ensemble d'automatisme 10, comme indiqué sur la figure 1. Le serveur WEB 20 communique avec d'autres équipements d'automatisme 11 de l'ensemble d'automatisme 10 via le réseau d'automatisme 15.

Il est possible aussi de prévoir une architecture de communication dans laquelle l'ensemble d'automatisme intègre plusieurs serveurs WEB susceptibles d'être embarqués dans un ou plusieurs équipements d'automatisme. Un automate programmable, par exemple, pourrait embarquer un serveur WEB dans son unité centrale et/ou un ou plusieurs serveurs WEB dans un ou plusieurs modules de l'automate programmable.

Le serveur WEB 20 est connecté à un réseau global 25 de type Internet, Intranet ou Extranet et communique avec une interface réseau 30 également connectée au réseau global 25. L'interface réseau 30 comporte une passerelle WAP 31 et est reliée par un réseau sans fil 35 à au moins un appareil mobile communicant autonome 40.

Selon un autre mode de réalisation montré en figure 2, on pourrait envisager qu'un serveur WEB 20' ne soit pas directement embarqué dans un équipement d'automatisme de l'ensemble d'automatisme 10. Dans ce cas, ce serveur WEB 20' communiquerait avec l'ensemble d'automatisme 10 via le réseau global 25 et serait embarqué ou non dans un équipement d'automatisme quelconque. L'architecture de communication pourrait également comporter d'autres ensembles d'automatisme 10b,10c, avec lesquels le serveur WEB 20' serait capable de communiquer via le réseau global 25.

Le serveur WEB 20 est capable de générer en langage WML soit des pages statiques stockées en mémoire, soit des pages dynamiques à partir de programmes écrits, par exemple, en langage C, JAVA ou autre. Ces pages et ces programmes sont mémorisés dans un espace mémoire 21 appartenant au serveur WEB 20. De façon équivalente, on pourrait également envisager de localiser l'espace mémoire 21 à l'extérieur du serveur WEB, par exemple sur le réseau global 25. Les pages dynamiques générées par le serveur WEB peuvent inclure des informations issues de l'ensemble d'automatisme 10. Ces informations fournissent différentes fonctions de surveillance, de visualisation et de contrôle de l'ensemble d'automatisme 10. Par exemple, si l'ensemble d'automatisme 10 comporte un équipement d'automatisme 11 tel qu'un automate programmable, ces informations peuvent contenir des variables représentatives du process contrôlé par l'automate programmable ou représentatives des différents états de l'automate programmable.

L'interface réseau 30 fait le routage des messages entre le réseau global 25 et le réseau sans fil 35. Cette interface 30 comprend une passerelle WAP 31 qui, lorsqu'elle reçoit en provenance du serveur WEB des contenus WML source non compilés (WML source ou WMLScript source), les transforme en contenus WML compilés ( WML compilé ou WMLScript compilé) avant de les transmettre à un appareil mobile communicant 40 par le réseau sans fil 35. Les contenus WML compilés sont en effet plus compacts et donc plus adaptés à une communication par réseau sans fil. Le serveur WEB peut aussi générer directement des pages WML compilées, ne nécessitant pas de transformation au niveau de la passerelle WAP 31. Par ailleurs, si les bandes passantes des réseaux sans fil deviennent suffisantes, il sera alors envisageable d'envoyer directement des contenus WML source sur un réseau sans fil 35.

L'appareil mobile communicant 40 possède un navigateur 41 conforme à l'architecture WAP, c'est-à-dire capable d'interpréter et d'afficher des pages en langage WML de façon à présenter une interface homme-machine à un utilisateur de l'appareil mobile 40.

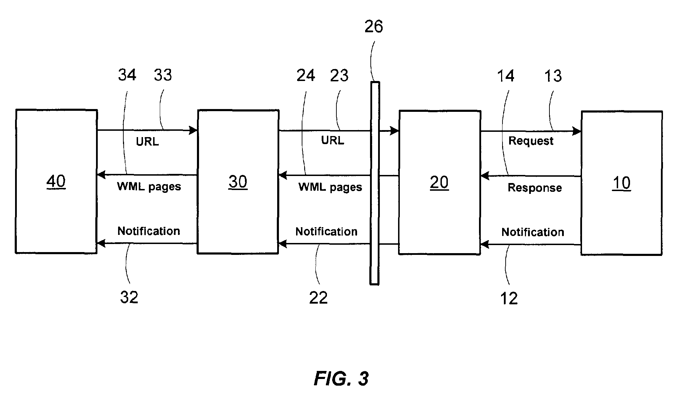

Grâce au navigateur WAP 41 implanté dans un appareil mobile 40, un utilisateur a la possibilité d'émettre une commande WAP 33 sur le réseau sans fil 35, comme schématisé en figure 3. Cette commande est routée par l'interface réseau 30 sur le réseau global 25 de façon à être interprétée par le serveur WEB 20. Une commande WAP 33 consiste en une requête HTTP qui spécifie une adresse URL du serveur WEB 20, éventuellement associée à des paramètres pouvant contenir également des requêtes complémentaires. Par exemple, ces requêtes complémentaires incluent d'autres adresses URL, qui sont alors routées par le serveur WEB 20; elles peuvent aussi inclure une ou plusieurs requêtes 13 codées selon un protocole compris par l'ensemble d'automatisme 10, par exemple des demandes de lecture et d'écriture de variables d'un équipement d'automatisme 11 de l'ensemble d'automatisme 10. Dans ce cas, le serveur WEB envoie les requêtes 13 à l'ensemble d'automatisme qui les analyse et qui renvoie une réponse 14 au serveur WEB.

En réponse à une commande WAP reçue, le serveur WEB élabore un message 24 sous forme de pages statiques ou dynamiques codées en langage WML, en insérant les éventuelles informations issues de la réponse 14 de l'ensemble d'automatisme 10. Ces pages sont acheminées vers l'appareil mobile communicant 40 au travers de l'interface réseau 30 dont la passerelle WAP 31 peut transformer les contenus WML source 24 en WML compilé 34. Ces pages sont présentées à l'utilisateur grâce au navigateur WAP 41 d'un appareil mobile 40, lui donnant ainsi la possibilité d'accéder à des fonctions de surveillance, de visualisation et de contrôle de l'ensemble d'automatisme 10.

Le serveur WEB 20 a également la possibilité d'émettre, de sa propre initiative ou à l'initiative de l'ensemble d'automatisme 10, une notification 22 à destination d'au moins un appareil mobile communicant 40. Par exemple, la surveillance d'un paramètre ou l'apparition d'un événement peuvent entraîner une demande de notification 12 initiée par l'ensemble d'automatisme 10 ; de même le serveur WEB peut lui-même poller une variable de l'ensemble d'automatisme 10 et émettre une notification 22 sur franchissement d'un seuil. Pour émettre une notification 22, un protocole appelé "Push Access Protocol" défini dans l'architecture WAP est utilisé. Dans cette notification 22, le serveur WEB 20 inclut une liste de destinataires issue d'un répertoire de destinataires qui est stocké soit localement dans la mémoire 21 ou soit à distance sur le réseau global 25. Quand elle reçoit une notification 22, l'interface réseau 30 transforme la liste de destinataires en une liste de numéros d'appel d'appareils mobiles 40. Puis, suivant une méthode préétablie, l'interface réseau 30 achemine la notification 32 vers un ou plusieurs destinataires 40. Cette fonctionnalité permet ainsi à l'utilisateur d'un navigateur WAP 41 implanté dans un appareil mobile 40 d'être informé à tout moment d'événements ou d'états concernant l'ensemble d'automatisme 10. La notification comprend, par exemple, un message visualisé sur le navigateur WAP 41 au moyen d'une page WML, associé à une adresse URL que l'utilisateur pourra adresser moyennant l'envoi d'une commande WAP 33 tel que décrit précédemment.

Les accès au serveur WEB 20 sont systématiquement protégés au moyen d'une interface coupe feu 26 (firewall) destinée à sécuriser les communications, plus particulièrement l'accès aux informations de l'ensemble d'automatisme 10 et les émetteurs de notifications. Différentes techniques de mots de passe ou de cryptage sont utilisables pour cette interface coupe feu 26. Ainsi, il est sous-entendu que les messages HTTP sont écrits suivant le protocole HTTP/S intégrant des fonctionnalités de sécurité.

Il est bien entendu que l'on peut, sans sortir du cadre de l'invention, imaginer d'autres variantes et perfectionnements de détail et de même envisager l'emploi de moyens équivalents.

## Revendications

1. Système d'accès à un ensemble d'automatisme programmable (10) basé sur une architecture WAP, à partir d'au moins un appareil mobile communicant (40) autonome, tel qu'un téléphone portable, lequel intègre un navigateur (41) conforme à l'architecture WAP, l'ensemble d'automatisme (10) comportant un ou plusieurs équipements d'automatisme, **caractérisé par** le fait que ce système comporte
- un serveur WEB (20), embarqué dans un équipement d'automatisme de l'ensemble d'automatisme (10), capable de générer des informations statiques ou dynamiques codées suivant le langage WML, ces informations pouvant fournir des fonctions de surveillance, de visualisation et de contrôle de l'ensemble d'automatisme,
- une interface réseau (30), reliée au serveur WEB (20) par un réseau global (25) de type Internet, Intranet ou Extranet qui autorise l'accès aux dites informations à partir du navigateur WAP (41) d'un appareil mobile communicant (40) via un réseau sans fil (35), de telle façon qu'un utilisateur d'un tel navigateur WAP (41) peut accéder à des fonctions de surveillance, de visualisation et de contrôle de l'ensemble d'automatisme (10).

2. Système d'accès selon la revendication 1, **caractérisé par** le fait que l'interface réseau (30) comprend une passerelle WAP (31) qui, lorsqu'elle reçoit en provenance du serveur WEB (20) des informations suivant un contenu WML source, les transforme en un contenu WML compilé avant de les transmettre à un appareil mobile communicant (40).

3. Système d'accès selon la revendication 1, dans lequel l'ensemble d'automatisme (10) comprend au moins un automate programmable industriel (11) possédant une unité centrale, **caractérisé par** le fait que le serveur WEB (20) est soit embarqué dans l'unité centrale de l'automate programmable (11) soit embarqué dans un module automate connecté à l'unité centrale de l'automate programmable (11).

4. Système d'accès selon la revendication 1, dans lequel l'ensemble d'automatisme (10) comprend plusieurs automates programmables industriels (11) possédant une unité centrale et un accès à un réseau d'automatisme (15) local ou global, **caractérisé par** le fait que le serveur WEB (20) est connecté au réseau d'automatisme (15) de façon à pouvoir communiquer avec les unités centrales de ces automates programmables (11).

5. Système d'accès selon la revendication 2, **caractérisé par** le fait que le serveur WEB (20) peut recevoir via l'interface réseau (30) une commande WAP (33) sous forme d'une requête HTTP spécifiant une adresse URL éventuellement associée à des paramètres pouvant contenir notamment des requêtes complémentaires, et, en réponse à cette commande WAP, le serveur WEB (20) génère des informations statiques ou dynamiques codées en langages WML pouvant fournir des fonctions de surveillance, de visualisation et de contrôle de l'ensemble d'automatisme (10) à l'utilisateur d'un navigateur WAP (41) implanté dans un appareil mobile communicant (40).

6. Système d'accès selon la revendication 2, **caractérisé par** le fait que le serveur WEB (20) peut envoyer, à son initiative ou à l'initiative de l'ensemble d'automatisme (10), une notification (22) à destination d'au moins un appareil mobile communicant (40) en utilisant le "Push Access Protocol" défini dans l'architecture WAP, de façon que l'utilisateur d'un navigateur WAP (41) implanté dans un appareil mobile communicant puisse être informé d'événements ou d'états concernant l'ensemble d'automatisme.

7. Système d'accès selon la revendication 6, **caractérisé par** le fait que le serveur WEB (20) inclut dans la notification (22) une liste de destinataires qui est issue d'un répertoire de destinataires stocké dans une mémoire locale ou dans une mémoire distante sur le réseau global (25).

8. Ensemble d'automatisme programmable **caractérisé par** le fait qu'il permet à au moins un appareil mobile communicant (40) via un réseau sans fil (35) et intégrant un navigateur WAP (41), d'accéder à des fonctions de surveillance, de visualisation et de contrôle de l'ensemble d'automatisme (10) selon l'une des revendications précédentes.
